# EUROPEAN PATENT SPECIFICATION

(11) **EP 1 508 239 B1**
(45) Date of publication and mention of the grant of the patent: **04.09.2013**
(21) Application number: 03718434.8
(22) Date of filing: 17.04.2003
(51) Int. Cl.: H04M 1/02

(54) **MOBILE COMMUNICATION DEVICE INCLUDING AN ARRAY SENSOR**
MOBILKOMMUNIKATIONSGERÄT MIT EINEM ARRAY-SENSOR
SYSTEME DE COMMUNICATION MOBILE POURVU DE CAPTEURS EN RESEAU

(30) Priority: 30.05.2002 US 158379
(43) Date of publication of application: 23.02.2005
(73) Proprietor: Motorola Mobility LLC, Libertyville, IL 60048 (US)
(72) Inventor: DIETRICH, Aaron, Caledonia, IL 61011 (US); CHARLIER, Michael, Palatine, IL 60067 (US); GITZINGER, Thomas, Palatine, IL 60067 (US)
(74) Representative: McLeish, Nicholas Alistair Maxwell
(86) International application number: PCT/US2003/011763
(87) International publication number: WO 2003/103157

(56) References cited:
- EP-A- 0 518 526
- WO-A-01/28189
- WO-A1-97/23016
- US-A- 5 335 368
- US-A- 5 396 351
- US-A- 5 565 658
- US-A- 5 565 658
- US-A- 5 742 894
- US-A- 5 856 822
- US-A- 5 995 373
- US-A- 6 006 117
- US-A- 6 081 259
- US-A- 6 149 442
- US-A1- 2001 008 839
- US-B1- 6 226 501
- US-B1- 6 243 080
- US-B1- 6 243 080
- US-B1- 6 262 717
- US-B1- 6 573 886

## Description

### BACKGROUND OF THE INVENTION

### 1. Field of Invention

The present invention is directed to a method and apparatus utilizing a mobile communication device including an array sensor. In particular, the present invention relates to mobile communication device including two housings and an array sensor.

### 2. Description of Related Art

Presently, enhanced applications on mobile communication devices are increasing in popularity. For example, mobile phones may include personal organizer applications, Internet access applications, messaging applications, or the like. Unfortunately, the enhanced applications may require inputs exceeding the available inputs on the device. For example, typical numeric keypads do not easily allow alpha character entry. Also, the limited surface area of a mobile communication device limits the number of inputs that can be added to the mobile communication device. For example, a full personal computer keyboard cannot be added to a mobile communication device without limiting its portability. Thus, mobile communication devices do not provide adequate inputs for enhanced applications.

Also, some mobile communication devices utilize a cover housing coupled to a main housing where the cover housing covers a portion of the keypad or another portion of the main housing. For example, the cover housing may be rotatably or removably coupled to the main housing. Unfortunately, a user loses access to many functions of the mobile communication device when the cover housing is in a closed position over the main housing. Accordingly, these mobile communication devices also do not provide adequate user input features.

Capacitive-based touch pads are disclosed in U.S. Patent No. 5,565,658, issued on October 15, 1996 to Gerpheide et al., U.S. Patent No. 5,861,875, issued on January 19, 1999 to Gerpheide, and U.S. Patent No. 6,222,528 B1, issued on April 24, 2001 to Gerpheide et al. These touch pads are disclosed as being a replacement for a mouse on both laptop and desktop computers. In particular, these touch pads are disclosed as being particularly useful as replacement pointing devices on computers utilizing full keyboards and displays such as monitors or large LCD displays. Unfortunately, such computers are not useful as mobile communication devices because of their limited portability. In particular, full keyboards, monitors, and even laptop computers are cumbersome to conveniently carry on a person. Another problem exists in that the touch pads take up a relatively large amount of surface area in addition to the keyboards and displays. Thus, the touch pad may add to the inconvenience of carrying a device that the touch pad is attached to when the touch pad Is included along with a full keyboard and display.

Therefore, there is a need for a means for convenient data entry for enhanced applications on a mobile communication device.

US patent no. 6,243,080 describes a wireless communications device with a touch-sensitive panel that is moveable between a normal position and a select position. The display on the device is preferably graphical and includes a cursor. The movement of the cursor is controlled, at least in part, by the users' interaction with the touch-sensitive panel. A detector senses when the touch-sensitive panel is moved to the select position and, in response, changes from an unselected state to a selected state, which state change is communicated to the main electronics of the device to signal that a selection is occurring. This arrangement allows the user to select, and optionally, 'drag-and-drop', without removing their finger from the touch-sensitive panel.

PCT application publication no. WO 01/28189 describes an electronic hand-held device comprising a keypad. A flap which is provided for covering the keypad and which is pivotally attached to the device comprises a sensitive surface e.g. a capacitive touch pad that serves as a supplementary text input and/or interaction means of the device.

### SUMMARY OF THE INVENTION

In accordance with the present invention there is provided a method of operation of a mobile communication device and a communication device as recited in the accompanying claims.

The invention provides an apparatus and method utilizing a mobile communication device including an array sensor. The apparatus can include a first housing, a second housing, and an array sensor. The apparatus may further include a controller coupled to the array sensor. The controller may include a field change sensing module configured to sense a change in a field across the array sensor and a parameter of operation adjustment module configured to adjust a parameter of operation of the apparatus based on a position of the second housing. The method can include the steps of sensing a position of the second housing and adjusting a sensitivity of the array sensor based on the position of the second housing. The array sensor may be located beneath a numeric keypad. Thus, the invention provides for convenient data entry on a mobile communication device.

### BRIEF DESCRIPTION OF THE DRAWINGS

The preferred embodiments of the present invention will be described with reference to the following figures, wherein like numerals designate like elements, and wherein:
Fig. 1 is an exemplary illustration of a mobile communication device according to a first embodiment;
Fig. 2 is an exemplary illustration of the mobile communication device according to a second embodiment;
Fig. 3 is an exemplary illustration of the mobile communication device according to a third embodiment;
Fig. 4 is an exemplary block diagram of the mobile communication device according to another embodiment;
Fig. 5 is an exemplary illustration of a capacitive array sensor according to one embodiment; and
Fig. 6 is an exemplary block diagram of a controller according to one embodiment.

### DETAILED DESCRIPTION OF PREFERRED EMBODIMENTS

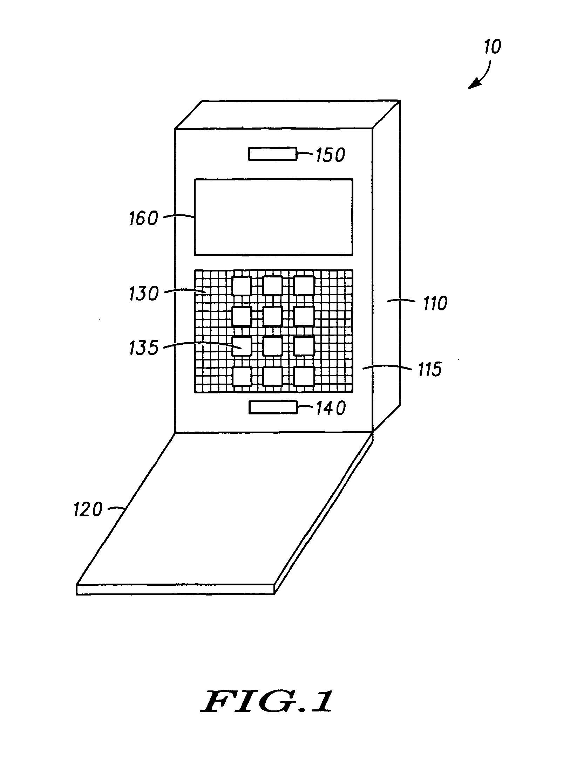

Fig. 1 is an exemplary illustration of a mobile communication device 10 according to one embodiment of the invention. This diagram illustrates one example of the mobile communication device 10 in an open position. The mobile communication device 10 can include a first housing 110 including a face 115, a second housing 120, a touch pad or array sensor 130, a keypad 135, an audio input device 140, an audio output device 150, and a visual output device 160. The first housing 110 or the second housing 120 may include any combination of the array sensor 130, the keypad 135, the audio input device 140, the audio output device 150, and the visual output device 160. The keypad 135 may be a numeric keypad and the array sensor 130 may be located beneath the keypad 135. The mobile communication device 10 does not necessarily require multiple input and output devices. For example, the mobile communication device may utilize only the array sensor 130 for input and the display 160 for output.

The second housing 120 may be coupled to the first housing 110 by means of a rotatable coupling, a slidable coupling, a detachable coupling, or any other means for coupling a first housing to a second housing. For example, the second housing 120 may rotate about or slide along the face of the first housing 115 or may pivot along an edge of the first housing 110. The audio input device 140 may be a microphone. The audio output device 150 may be a speaker. The display 160 may be a LCD display, a LED display, or any other display useful for displaying visual information. The display 160 can incorporate a backlight for ease of viewing displayed information. The array sensor 130 may be located underneath the keypad 135 or the like located on the face of the first housing 115. The array sensor 130 may be a capacitive array sensor, an inductive array sensor, or any other sensor useful for sensing an object in close proximity to the array sensor 130. For example, the array sensor 130 may include x-axis and y-axis electrodes that are printed on a plastic substrate. These electrodes can be charged up and monitored for changes as described below.

In operation, the mobile communication device 10 can communicate with other mobile communication devices, base stations, or the like. The audio input device 140 can receive audio signals for transmission and the audio output device 150 can output received communication signals in audio format. The display 160 can display visual information to a user of the mobile communication device 10, such as a dialed phone number, a signal strength indicator, phone book entries, text messages, icons, or any other useful visual information. The second housing 120 may open to provide access to at least a portion of or the entire face of the first housing 115 or close to cover the face of the first housing 115. The array sensor 130 can be tuned to detect the position of a conductive body, such as a finger, based on, for example, changes in the capacitances in the electrodes. The sensitivity or range at which a body changes the capacitance of the electrode enough to be detected can be tunable from tenths of a millimeter to as much as over 12 millimeters. For example, when the second housing is in an open position, the array sensor 130 can initially be tuned to a range where a user's finger on the outside of the housing face 115 will activate it. According to another example, the array sensor 130 can scan for a finger to come into a different range that changes the capacitance for activation. Thus, the invention can provide additional input functionality for a mobile communication device 10.

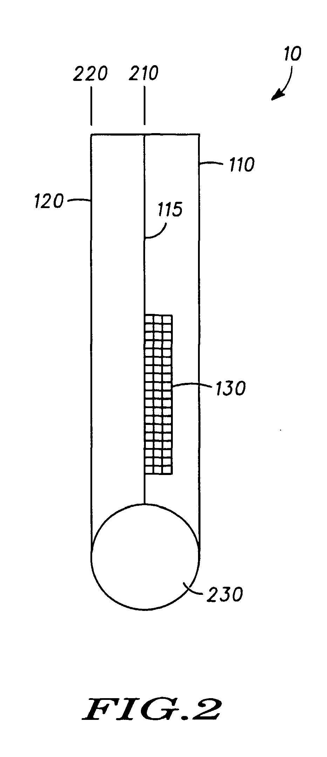

Fig. 2 is an exemplary illustration of the mobile communication device 10 according to a second embodiment. This diagram illustrates one example of the mobile communication device 10 with the second housing 120 in a closed position. The mobile communication device 10 can include a pivot 230 for rotatably coupling the second housing 120 to the first housing 110. In operation, when the second housing 120 is in a closed position, the array sensor 130 can adjust or increase its sensitivity from a first sensitivity 210 corresponding to the face of the first housing 115 to a second sensitivity 220 corresponding to an exterior of the second housing 240. Thus, the invention can provide for additional input functionality, even when the keypad 135 is covered with the second housing 120 in a closed position. For example, the second housing may include markings for input functions. Additionally, the invention can provide for handwriting recognition on the exterior of the second housing 120.

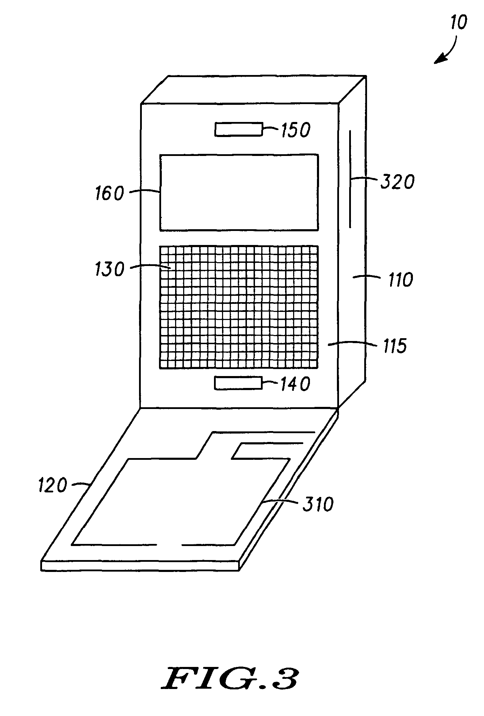

The array sensor 130 may also detect the open or closed positions of the second housing 120 based on a conductive element located within the second housing. For example, the conductive element may be a predetermined pattern such as an antenna 310 as illustrated in Fig. 3. Alternatively, the conductive element may be any other predetermined pattern coupled to the second housing 120. Furthermore, a switch or any other device useful for detecting an open or closed position of the second housing 120 may be used to detect the open or closed position. Also, when the open or closed position is detected, the mobile communication device 10 may retune antenna matching circuitry, retune a counterpoise, switch operation to another antenna 320, or perform any other function for improving operation based on the antenna location.

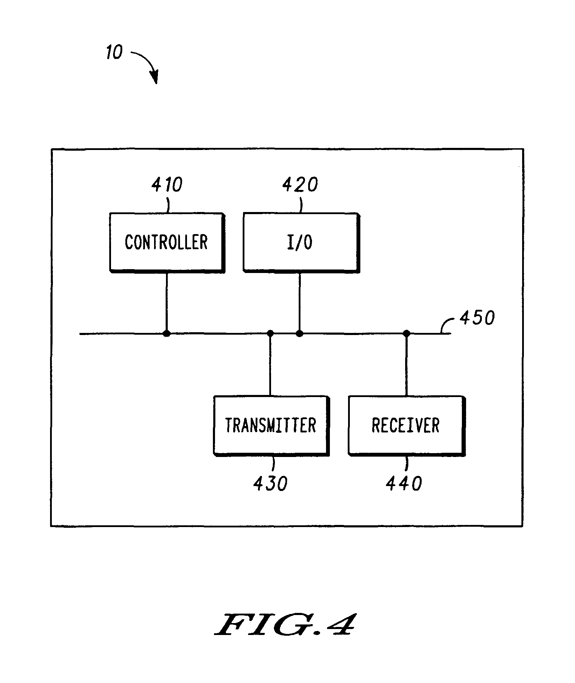

Fig. 4 is an exemplary block diagram of the mobile communication device 10 according to another embodiment. The mobile communication device 10 can include a controller 410, input/output (I/O) circuitry 420, transmitter circuitry 430, receiver circuitry 440, and a bus 450. In operation, the bus 450 allows the various circuitry and components of the mobile communication device 10 to communicate with each other. The I/O circuitry provides an interface for the I/O devices such as the array sensor 130, the keypad 135, the audio input device 140, the display 160, and the audio output device 150. The transmitter circuitry 430 provides for the transmission of communication signals to other mobile communication devices, base stations, or the like. The receiver circuitry 440 provides for the reception of communication signals from other mobile communication devices, base stations, or the like. The controller 410 controls the operation of the mobile communication device 10.

According to one embodiment, the controller 410 senses a position of the second housing 120 and adjusts the sensitivity of the array sensor 130 based on the position of the second housing 120. The sensed position may be a closed position and the array sensor 130 may be a capacitive array sensor. The controller 410 can increase the sensitivity of the array sensor 130 to an area outside the second housing 120 based on the closed position of the second housing 120. The controller can also recalibrate the array sensor 130 to tune out effect of any metal that may be located in the second housing 120. The controller 410 can also sense an open position of the second housing 120 and readjust the sensitivity of the array sensor 130 based on the open position of the second housing 120. For example, the controller 410 can decrease the sensitivity of the array sensor 130 to the face of the first housing 115 based on the open position of the second housing 120. The controller 410 may sense the position of the second housing 120 by utilizing the array sensor 130.

According to another embodiment, the controller 410 may be configured to include a data entry function that can be enabled and disabled. For example, a user can disable the data entry function when placing the mobile communication device 10 in the user's pocket or when not actively using the mobile communication device 10. Thus, the array sensor 130 will not detect incidental conductive objects for data entry purposes when such sensing is not desired. Enablement and disablement of the data entry function may be done by depressing a dedicated button located on the first housing 110 or second housing 120 of the mobile communication device 10. Furthermore, because antenna performance can be affected by the proximity of large conductive objects, the controller 410 may be configured to detect the presence of a conductive object when the data entry function is disabled. The controller 410 may then generate an audible alert or display a message on the display 160 when the conductive object is detected. Thus, the user can be informed, for example, when the mobile communication device 10 is in a poor position to receive an incoming call. For example, when a mobile communication device 10 is placed in a pocket with an antenna in a flip located next to the user's body, an alarm can be generated and a message displayed explaining how to get optimal performance from the mobile communication device 10. Other objects that can trigger the alarm can include purses, briefcases, tables, or any other object that may affect the performance of the mobile communication device 10.

According to another embodiment, the controller 410 may be further configured to activate the display backlight located within the display 160 when a conductive object is detected. For example, the backlight can be activated for display illumination when a user picks up the mobile communication device 10.

According to another embodiment, the array sensor 130 is a capacitive array sensor. The controller 410 senses a change in the capacitive field across the capacitive array sensor 130 based on a position of the second housing 120 by using a predefined conductive pattern located within the second housing 120 and adjusts a parameter of operation of the mobile communication device 10 based on the position of the second housing 120. The parameter of operation may be a sensitivity of operation of the capacitive array sensor 130. Also, the predefined conductive pattern may be an antenna 310 integral with the second housing 120. The controller 410 may increase the sensitivity of the capacitive array sensor 130 to the exterior of the second housing 120 based on a closed position of the second housing 120. Additionally, the controller 410 may retune antenna matching circuitry located within the transmitter circuitry 430 or the receiver circuitry 440 based on the position of the second housing 120. The controller 410 may switch operation from one antenna 310 to another antenna 320 based on the position of the second housing 120.

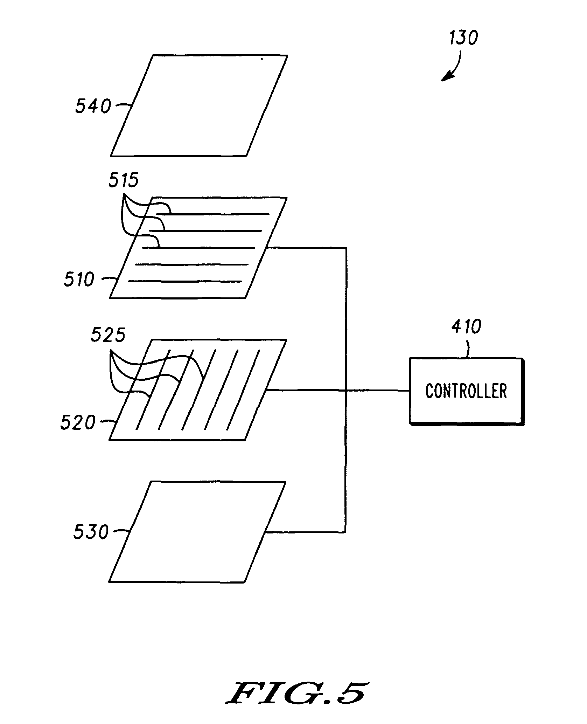

Fig. 5 is an exemplary illustration of an example of the array sensor 130 as a capacitive array sensor 130 according to one embodiment. The capacitive array sensor 130 can include a first electrode array 510 including electrodes 515, a second electrode array 520 including electrodes 525, a touch pad surface 540, and a sense electrode 530. The first electrode array 510 can cross over the second electrode array 520 with the first array electrodes 515 perpendicular to the second array electrodes 525 to define a crossover region. A spacer such as a dielectric, an insulator, an air gap, or the like may separate the electrode arrays 510 and 520.

In operation, the first electrode array 510 can establish an electric field in conjunction with the second electrode array 520. This electric field can also be determined with respect to the sense electrode 530. The sense electrode 530 is not necessary for operation of the electrode arrays 510 and 520. In particular, an electric field or capacitances may be generated between the electrode arrays 510 and 520 without using a sense electrode 530. The controller 410 may supply electrical charges to the first electrode array 510 and the second electrode array 520 to develop the electric field such that a capacitance is present between the electrode arrays 510 and 520 or between each electrode array 510 and 520 and the sense electrode 530. The controller 410 may detect the presence of a conductive object in close proximity to the touch pad surface 540 based on effects of the conductive object on the capacitance. For example, a conductive object, such as a finger, in close proximity to the capacitive array sensor 130 can decrease the capacitance. The controller 410 can then detect the presence of the conductive object by measuring the decrease in capacitance. The controller 410 can then determine the position of the conductive object based on the changes in the capacitance relating to the relevant electrodes 515 and 525.

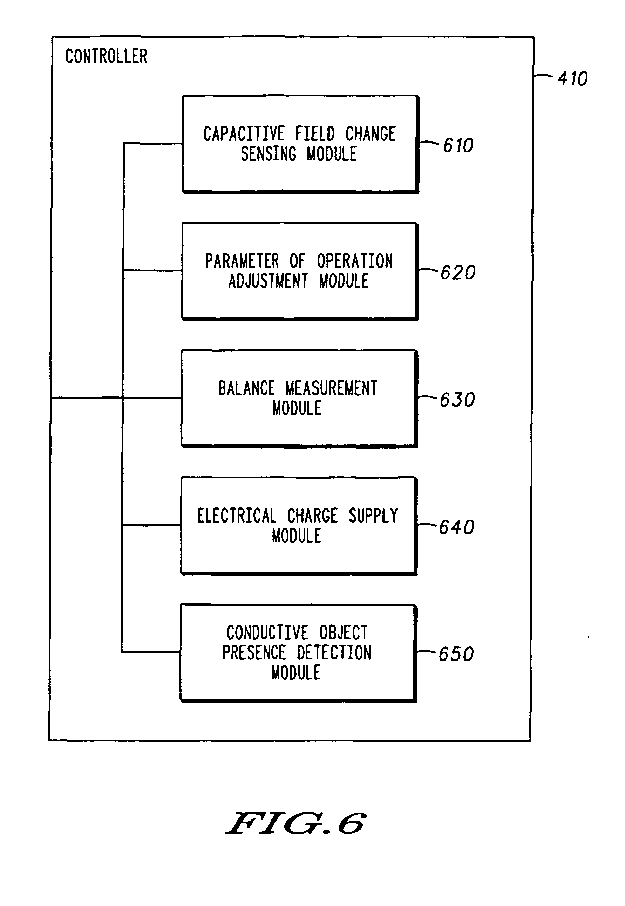

Fig. 6 is an exemplary block diagram of the controller 410 according to another embodiment. The controller 410 may include a capacitive field change sensing module 610, a parameter of operation adjustment module 620, a balance measurement module 630, an electrical charge supply module 640, and a conductive object presence detection module 650. The modules may be circuitry, software algorithms, programmable logic devices, or the like located within the controller 410.

In operation, the capacitive field change sensing module 610 senses a change in the capacitive field across the capacitive array sensor 130 and the parameter of operation adjustment module 620 adjusts a parameter of operation of the mobile communication device 10 based on the position of the second housing 120. The parameter of operation adjustment module 620 can adjust a sensitivity of the capacitive array sensor 130 based on an open or closed position of the second housing 120. The capacitive array sensor 130 may include the first electrode array 510 and the second electrode array 520 arranged perpendicular to the first electrode array 510 to establish an electromagnetic field corresponding to the electrode arrays. The balance measurement module 630 can determine a position of a conductive object based on a measured balance between the first electrode array 510 and the second electrode array 520 of the capacitive array sensor 130. The electrical charge supply module 640 can supply an electrical charge to the first electrode array 510 and the second electrode array 520 to create a mutual capacitance between the arrays of the capacitive array sensor 130.

The conductive object presence detection module 650 can detect the presence of a conductive object by sensing a change in the capacitive field. This change in the capacitive field can be detected by measuring a decrease in the mutual capacitance between the first electrode array 510 and the second electrode array 520. The parameter of operation adjustment module 620 can also increase a sensitivity of the capacitive array sensor 130 to an area outside of the second housing 120 based on a position of the second housing 120. The capacitive field change sensing module 610 can also sense a change in a capacitive field across the capacitive array sensor 130 based on a closed position of the second housing 120 using a predefined conductive pattern.

The method of this invention is preferably implemented on a programmed processor. However, the operations of the controller 410 may also be implemented on a general purpose or special purpose computer, a programmed microprocessor or microcontroller and peripheral integrated circuit elements, an ASIC or other integrated circuit, a hardware electronic or logic circuit such as a discrete element circuit, a programmable logic device such as a PLD, PLA, FPGA or PAL, or the like. In general, any device on which resides a finite state machine capable of implementing the operations of the controller 410 may be used to implement the processor functions of this invention.

While this invention has been described with specific embodiments thereof, it is evident that many alternatives, modifications, and variations will be apparent to those skilled in the art. For example, various components of the embodiments may be interchanged, added, or substituted with other components of other embodiments. Accordingly, the preferred embodiments of the invention as set forth herein are intended to be illustrative, not limiting. Various changes may be made without departing from the and scope of the invention.

## Claims

1. A method of operation of a mobile communication device (10) including a first housing (110), a second housing (120) coupled to the first housing (110), and an array sensor (130) coupled to the first housing (110), the method being **characterised by**:
sensing a position of the second housing (120); and
increasing a sensitivity of the array sensor operation to an exterior of the second housing based on the closed position of the second housing, the array sensor (130) being covered by the second housing (120) when the second housing is In the closed position.

2. The method of operation of a mobile communication device according to claim 1, wherein the array sensor (130) is a capacitive array sensor.

3. The method of operation of a mobile communication device according to claim 1, further comprising:
sensing an open position of the second housing (120); and
readjusting a sensitivity of the array sensor (130) based on the open position of the second housing.

4. The method of operation of a mobile communication device according to claim 3, wherein the readjusting step further comprises decreasing the sensitivity of the array sensor (130).

5. The method of operation of a mobile communication device according to claim 1, wherein the second housing (120) comprises a housing rotatably coupled to the first housing (110).

6. The method of operation of a mobile communication device according to claim 1, wherein the sensing step further comprises sensing a closed position of the second housing (120) using the array sensor (130).

7. The method of operation of a mobile communication device according to claim 2, wherein the sensing step further comprises sensing the change in the capacitive field across the capacitive array sensor (130) based on the closed position of the second housing (120) using a conductive element (310) located within the second housing.

8. The method of operation of a mobile communication device according to claim 1, wherein the second housing (120) includes an antenna (310) integral with the second housing and the method further comprises retuning antenna matching circuitry based on the position of the second housing.

9. The method of operation of a mobile communication device according to claim 1, wherein the second housing (120) includes a first antenna (310) integral with the second housing and the method further comprises switching from the operation of the first antenna to the operation of a second antenna (320).

10. A mobile communication device (10), comprising:
a first housing (110);
a second housing (120) coupled to the first housing;
an array sensor (130) coupled to the first housing (110); and
a controller (410) coupled to the array sensor, the controller including:
a field change sensing module (610) configured to sense a change in a field across the array sensor, and
the mobile communication device being **characterised in that** the controller further includes:
a parameter of operation adjustment module (620) configured to increase a sensitivity of the array sensor operation to an exterior of the second housing based on a closed position of the second housing, the array sensor (130) being covered by the second housing (120) when the second housing is in the closed position.

11. The mobile communication device according to claim 10, wherein the controller (410) is further configured to sense a position of the second housing with respect to the first housing, including the closed position.

12. The mobile communication device according to claim 11, wherein the controller (410) is further configured to sense an open position of the second housing (120) and to decrease the sensitivity of the array sensor (130) based on the open position of the second housing (120).

13. The mobile communication device according to claim 11 or 12, wherein the controller (410) is further configured to sense the position of the second housing using the array sensor.

14. The mobile communication device according to claim 11 or 12, wherein the controller (410) is further configured to sense a closed position of the second housing using the array sensor and a conductive element (310) located within the second housing.

15. The mobile communication device according to claim 10, wherein the second housing (120) includes an antenna (310) integral with the second housing (120) and wherein the parameter of operation adjustment module (620) is further configured to retune antenna matching circuitry.

16. The mobile communication device according to claim 10, wherein the second housing (120) includes a first antenna (310) integral with the second housing and wherein the parameter of operation adjustment module (620) is further configured to a switch from the operation of the first antenna (310) to the operation of a second antenna (320).

17. The mobile communication device according to claim 10, further comprising a numeric keypad (135) coupled to the first housing (110), wherein the array sensor (130) is located beneath the numeric keypad coupled to the first housing (110).

18. The mobile communication device according to any one of claims 10-17, wherein the array sensor (130) is a capacitive array sensor (130).

19. The mobile communication device according to claim 10, wherein the second housing (120) comprises a housing rotatably coupled to the first housing (110).

20. The mobile communication device according to claim 10, wherein the second housing (120) comprises a housing slidably coupled to the first housing (110).

21. The mobile communication device according to claim 10, wherein the second housing (120) comprises a housing removably coupled to the first housing (110).

22. The mobile communication device according to claim 10, wherein the controller (410) is configured to recalibrate the array sensor (130) to tune out effects of metal located within the second housing (120).

23. The mobile communication device according to claim 10, wherein the controller (410) is configured to include a data entry function and the controller is further configured to detect a conductive object when a data entry function is disabled.

24. The mobile communication device according to claim 23, wherein the controller (410) is further configured to generate an audible alert when the conductive object is detected.

25. The mobile communication device according to claim 24, further comprising a display (160), wherein the controller (410) is further configured to display a message on the display when the conductive object is detected.

26. The mobile communication device according to claim 23, further comprising a display backlight, wherein the controller (410) is further configured to activate the display backlight when the conductive object is detected.

## Patentansprüche

1. Verfahren für den Betrieb einer mobilen Kommunikationsvorrichtung (10), welche ein erstes Gehäuse (110), ein mit dem ersten Gehäuse (110) gekoppeltes zweites Gehäuse (120) sowie einen mit dem ersten Gehäuse (110) gekoppelten Array-Sensor (130) aufweist, wobei das Verfahren durch die folgenden Schritte gekennzeichnet ist:
Erkennen einer Position des zweiten Gehäuses (120); und
Erhöhen einer Sensitivität des Array-Sensor-Betriebs für einen Außenbereich des zweiten Gehäuses basierend auf der geschlossenen Position des zweiten Gehäuses, wobei der Array-Sensor (130) von dem zweiten Gehäuse (120) abgedeckt bzw. ummantelt ist, wenn sich das zweite Gehäuse in der geschlossenen Position befindet.

2. Verfahren für den Betrieb einer mobilen Kommunikationsvorrichtung nach Anspruch 1, **dadurch gekennzeichnet, dass** der Array-Sensor (130) ein kapazitiver Array-Sensor ist.

3. Verfahren für den Betrieb einer mobilen Kommunikationsvorrichtung nach Anspruch 1, welches des Weiteren die folgenden Schritte aufweist:
Erkennen einer geöffneten Position des zweiten Gehäuses (120); und
Nachjustieren einer Sensitivität des Array-Sensors (130) auf der Basis der geöffneten Position des zweiten Gehäuses.

4. Verfahren für den Betrieb einer mobilen Kommunikationsvorrichtung nach Anspruch 3, **dadurch gekennzeichnet, dass** der Nachjustierungsschritt des Weiteren die Verringerung der Sensitivität des Array-Sensors (130) aufweist.

5. Verfahren für den Betrieb einer mobilen Kommunikationsvorrichtung nach Anspruch 1, **dadurch gekennzeichnet, dass** das zweite Gehäuse (120) ein Gehäuse aufweist, welches drehbar mit dem ersten Gehäuse (110) gekoppelt ist.

6. Verfahren für den Betrieb einer mobilen Kommunikationsvorrichtung nach Anspruch 1, **dadurch gekennzeichnet, dass** der Erkennungsschritt des Weiteren die Erkennung einer geschlossenen Position des zweiten Gehäuses (120) unter Verwendung des Array-Sensors (130) aufweist.

7. Verfahren für den Betrieb einer mobilen Kommunikationsvorrichtung nach Anspruch 2, **dadurch gekennzeichnet, dass** der Erkennungsschritt des Weiteren die Erkennung der Veränderung in dem kapazitiven Feld am kapazitiven Array-Sensor (130) auf der Basis der geschlossenen Position des zweiten Gehäuses (120) aufweist, indem er ein in dem zweiten Gehäuse gelegenes leitendes Element (310) verwendet.

8. Verfahren für den Betrieb einer mobilen Kommunikationsvorrichtung nach Anspruch 1, **dadurch gekennzeichnet, dass** das zweite Gehäuse (120) eine Antenne (310) einschließt, welche in das zweite Gehäuse fest eingebaut ist, und wobei das Verfahren des Weiteren die Nachstimmung einer Antennenanpassungsschaltung basierend auf der Position des zweiten Gehäuses aufweist.

9. Verfahren für den Betrieb einer mobilen Kommunikationsvorrichtung nach Anspruch 1, **dadurch gekennzeichnet, dass** das zweite Gehäuse (120) eine erste Antenne (310) aufweist, welche in das zweite Gehäuse fest eingebaut ist, und wobei das Verfahren des Weiteren die Umschaltung vom Betrieb der ersten Antenne auf den Betrieb einer zweiten Antenne (320) aufweist.

10. Mobile Kommunikationsvorrichtung (10), welche Folgendes aufweist:
ein erstes Gehäuse (110);
ein zweites Gehäuse (120), welches mit dem ersten Gehäuse gekoppelt ist;
einen Array-Sensor (130), welcher mit dem ersten Gehäuse (110) gekoppelt ist; und
einen Controller (410), welcher mit dem Array-Sensor gekoppelt ist, wobei der Controller Folgendes aufweist:
ein Feldveränderungs-Sensormodul (610), welches zur Erkennung einer Veränderung in einem Feld am Array-Sensor ausgelegt ist, und
wobei die mobile Kommunikationsvorrichtung **dadurch gekennzeichnet ist, dass** der Controller des Weiteren Folgendes einschließt:
ein Betriebsparameter-Anpassungsmodul (620), welches zur Erhöhung einer Sensitivität des Array-Sensor-Betriebs für einen Außenbereich des zweiten Gehäuses basierend auf einer geschlossenen Position des zweiten Gehäuses konfiguriert ist, wobei der Array-Sensor (130) von dem zweiten Gehäuse (120) umschlossen ist, wenn sich das zweite Gehäuse in der geschlossenen Position befindet.

11. Mobile Kommunikationsvorrichtung nach Anspruch 10, **dadurch gekennzeichnet, dass** der Controller (410) des Weiteren zur Erkennung einer Position des zweiten Gehäuses hinsichtlich des ersten Gehäuses ausgelegt ist, einschließlich der geschlossenen Position.

12. Mobile Kommunikationsvorrichtung nach Anspruch 11, **dadurch gekennzeichnet, dass** der Controller (410) des Weiteren zur Erkennung einer geöffneten Position des zweiten Gehäuses (120) und zur Verringerung der Sensitivität des Array-Sensors (130) basierend auf der geöffneten Position des zweiten Gehäuses (120) ausgelegt ist.

13. Mobile Kommunikationsvorrichtung nach Anspruch 11 oder 12, **dadurch gekennzeichnet, dass** der Controller (410) des Weiteren zur Erkennung der Position des zweiten Gehäuses unter Verwendung des Array-Sensors ausgelegt ist.

14. Mobile Kommunikationsvorrichtung nach Anspruch 11 oder 12, **dadurch gekennzeichnet, dass** der Controller (410) des Weiteren zur Erkennung einer geschlossenen Position des zweiten Gehäuses unter Verwendung des Array-Sensors und eines in dem zweiten Gehäuse gelegenen leitenden Elements (310) ausgelegt ist.

15. Mobile Kommunikationsvorrichtung nach Anspruch 10, **dadurch gekennzeichnet, dass** das zweite Gehäuse (120) eine Antenne (310) einschließt, welche in das zweite Gehäuse (120) fest eingebaut ist, und dass das Betriebsparameter-Anpassungsmodul (620) des Weiteren zur Nachstimmung einer Antennenanpassungsschaltung ausgelegt ist.

16. Mobile Kommunikationsvorrichtung nach Anspruch 10, **dadurch gekennzeichnet, dass** das zweite Gehäuse (120) eine erste Antenne (310) einschließt, welche in das zweite Gehäuse fest eingebaut ist, und dass das Betriebsparameter-Anpassungsmodul (620) des Weiteren zur Umschaltung von dem Betrieb der ersten Antenne (310) auf den Betrieb einer zweiten Antenne (320) ausgelegt ist.

17. Mobile Kommunikationsvorrichtung nach Anspruch 10, welche des Weiteren einen Ziffernblock (135) aufweist, welcher mit dem ersten Gehäuse (110) gekoppelt ist, **dadurch gekennzeichnet, dass** der Array-Sensor (130) unter dem mit dem ersten Gehäuse (110) gekoppelten Ziffernblock angeordnet ist.

18. Mobile Kommunikationsvorrichtung nach einem der Ansprüche 10 bis 17, **dadurch gekennzeichnet, dass** der Array-Sensor (130) ein kapazitiver Array-Sensor (130) ist.

19. Mobile Kommunikationsvorrichtung nach Anspruch 10, **dadurch gekennzeichnet, dass** das zweite Gehäuse (120) ein Gehäuse aufweist, welches drehbar mit dem ersten Gehäsue (110) gekoppelt ist.

20. Mobile Kommunikationsvorrichtung nach Anspruch 10, **dadurch gekennzeichnet, dass** das zweite Gehäuse (120) ein Gehäuse aufweist, welches verschiebbar mit dem ersten Gehäuse (110) gekoppelt ist.

21. Mobile Kommunikationsvorrichtung nach Anspruch 10, **dadurch gekennzeichnet, dass** das zweite Gehäuse (120) ein Gehäuse aufweist, welches abnehmbar mit dem ersten Gehäuse (110) gekoppelt ist.

22. Mobile Kommunikationsvorrichtung nach Anspruch 10, **dadurch gekennzeichnet, dass** der Controller (410) zur Neukalibrierung des Array-Sensors (130) ausgelegt ist, um Einflüsse von in dem zweiten Gehäuse (120) befindlichem Metall auszuschalten.

23. Mobile Kommunikationsvorrichtung nach Anspruch 10, **dadurch gekennzeichnet, dass** der Controller (410) so ausgelegt ist, dass er eine Dateneingabefunktion einschließt, und dass der Controller des Weiteren zur Erfassung eines leitenden Objekts ausgelegt ist, wenn eine Dateneingabefunktion deaktiviert ist.

24. Mobile Kommunikationsvorrichtung nach Anspruch 23, **dadurch gekennzeichnet, dass** der Controller (410) des Weiteren zur Erzeugung einer akustischen Warnung ausgelegt ist, wenn das leitende Objekt erfasst wird.

25. Mobile Kommunikationsvorrichtung nach Anspruch 24, welche des Weiteren ein Display (160) aufweist, **dadurch gekennzeichnet, dass** der Controller (410) des Weiteren zur Anzeige einer Nachricht auf dem Display ausgelegt ist, wenn das leitende Objekt erfasst wird.

26. Mobile Kommunikationsvorrichtung nach Anspruch 23, welche des Weiteren eine Displaybeleuchtung aufweist, **dadurch gekennzeichnet, dass** der Controller (410) des Weiteren zur Aktivierung der Displaybeleuchtung ausgelegt ist, wenn das leitende Objekt erfasst wird.

## Revendications

1. Procédé d'exploitation d'un dispositif de communication mobile (10) incluant un premier boîtier (110), un second boîtier (120) couplé au premier boîtier (110), et un capteur matriciel (130) couplé au premier boîtier (110), le procédé étant **caractérisé en ce qu'**il consiste à :
détecter une position du second boîtier (120) ; et
augmenter une sensibilité du fonctionnement du capteur matriciel à une partie extérieure du second boîtier sur la base de la position fermée du second boîtier, le capteur matriciel (130) étant recouvert par le second boîtier (120) lorsque le second boîtier est dans la position fermée.

2. Procédé d'exploitation d'un dispositif de communication mobile selon la revendication 1, dans lequel le capteur matriciel (130) est un capteur matriciel capacitif.

3. Procédé d'exploitation d'un dispositif de communication mobile selon la revendication 1, consistant en outre à :
détecter une position ouverte du second boîtier (120) ; et
réajuster une sensibilité du capteur matriciel (130) sur la base de la position ouverte du second boîtier.

4. Procédé d'exploitation d'un dispositif de communication mobile selon la revendication 3, dans lequel l'étape de réajustement consiste en outre à diminuer la sensibilité du capteur matriciel (130).

5. Procédé d'exploitation d'un dispositif de communication mobile selon la revendication 1, dans lequel le second boîtier (120) comprend un boîtier couplé de manière rotative au premier boîtier (110).

6. Procédé d'exploitation d'un dispositif de communication mobile selon la revendication 1, dans lequel l'étape de détection consiste en outre à détecter une position fermée du second boîtier (120) en utilisant le capteur matriciel (130).

7. Procédé d'exploitation d'un dispositif de communication mobile selon la revendication 2, dans lequel l'étape de détection consiste en outre à détecter la modification du champ capacitif à travers le capteur matriciel capacitif (130), sur la base de la position fermée du second boîtier (120), en utilisant un élément conducteur (310) situé à l'intérieur du second boîtier.

8. Procédé d'exploitation d'un dispositif de communication mobile selon la revendication 1, dans lequel le second boîtier (120) inclut une antenne (310) solidaire du second boîtier, et le procédé consiste en outre à réaccorder le montage de circuits d'adaptation d'antennes sur la base de la position du second boîtier.

9. Procédé d'exploitation d'un dispositif de communication mobile selon la revendication 1, dans lequel le second boîtier (120) inclut une première antenne (310) solidaire du second boîtier, et le procédé consiste en outre à commuter du fonctionnement de la première antenne au fonctionnement d'une seconde antenne (320).

10. Dispositif de communication mobile (10), comprenant :
un premier boîtier (110) ;
un second boîtier (120) couplé au premier boîtier;
un capteur matriciel (130) couplé au premier boîtier (110) ; et
un contrôleur (410) couplé au capteur matriciel, le contrôleur comprenant :
un module de détection de modification de champ (610) configuré de manière à détecter une modification d'un champ à travers le capteur matriciel ; et
le dispositif de communication mobile étant **caractérisé en ce que** le contrôleur comprend en outre :
un module d'ajustement de paramètre de fonctionnement (620) configuré de manière à augmenter une sensibilité du fonctionnement du capteur matriciel à une partie extérieure d'un second boîtier, sur la base d'une position fermée du second boîtier, le capteur matriciel (130) étant recouvert par le second boîtier (120) lorsque le second boîtier est dans la position fermée.

11. Dispositif de communication mobile selon la revendication 10, dans lequel le contrôleur (410) est en outre configuré de manière à détecter une position du second boîtier relativement au premier boîtier, incluant la position fermée.

12. Dispositif de communication mobile selon la revendication 11, dans lequel le contrôleur (410) est en outre configuré de manière à détecter une position ouverte du second boîtier (120) et à diminuer la sensibilité du capteur matriciel (130) sur la base de la position ouverte du second boîtier (120).

13. Dispositif de communication mobile selon la revendication 11 ou 12, dans lequel le contrôleur (410) est en outre configuré de manière à détecter la position du second boîtier en utilisant le capteur matriciel.

14. Dispositif de communication mobile selon la revendication 11 ou 12, dans lequel le contrôleur (410) est en outre configuré de manière à détecter une position fermée du second boîtier en utilisant le capteur matriciel et un élément conducteur (310) situé à l'intérieur du second boîtier.

15. Dispositif de communication mobile selon la revendication 10, dans lequel le second boîtier (120) inclut une antenne (310) solidaire du second boîtier (120), et dans lequel le module d'ajustement de paramètre de fonctionnement (620) est en outre configuré de manière à réaccorder un montage de circuits d'adaptation d'antennes.

16. Dispositif de communication mobile selon la revendication 10, dans lequel le second boîtier (120) inclut une première antenne (310) solidaire du second boîtier, et dans lequel le module d'ajustement de paramètre de fonctionnement (620) est en outre configuré de manière à commuter du fonctionnement de la première antenne (310) au fonctionnement d'une seconde antenne (320).

17. Dispositif de communication mobile selon la revendication 10, comprenant en outre un pavé numérique (135) couplé au premier boîtier (110), dans lequel le capteur matriciel (130) est situé sous le pavé numérique couplé au premier boîtier (110).

18. Dispositif de communication mobile selon l'une quelconque des revendications 10 à 17, dans lequel le capteur matriciel (130) est un capteur matriciel capacitif (130).

19. Dispositif de communication mobile selon la revendication 10, dans lequel le second boîtier (120) comprend un boîtier couplé de manière rotative au premier boîtier (110).

20. Dispositif de communication mobile selon la revendication 10, dans lequel le second boîtier (120) comprend un boîtier couplé de manière coulissante au premier boîtier (110).

21. Dispositif de communication mobile selon la revendication 10, dans lequel le second boîtier (120) comprend un boîtier couplé de manière amovible au premier boîtier (110).

22. Dispositif de communication mobile selon la revendication 10, dans lequel le contrôleur (410) est configuré de manière à recalibrer le capteur matriciel (130) afin d'éliminer les effets du métal situé à l'intérieur du second boîtier (120).

23. Dispositif de communication mobile selon la revendication 10, dans lequel le contrôleur (410) est configuré de manière à inclure une fonction d'entrée de données, et le contrôleur est en outre configuré de manière à détecter un objet conducteur lorsqu'une fonction d'entrée de données est désactivée.

24. Dispositif de communication mobile selon la revendication 23, dans lequel le contrôleur (410) est en outre configuré de manière à émettre une alerte audible lorsque l'objet conducteur est détecté.

25. Dispositif de communication mobile selon la revendication 24, comprenant en outre un affichage (160), dans lequel le contrôleur (410) est en outre configuré de manière à afficher un message sur l'affichage lorsque l'objet conducteur est détecté.

26. Dispositif de communication mobile selon la revendication 23, comprenant en outre un rétroéclairage d'affichage, dans lequel le contrôleur (410) est en outre configuré de manière à activer le rétroéclairage d'affichage lorsque l'objet conducteur est détecté.
